Europäisches Patentamt

European Patent Office

Office européen des brevets

(11) Veröffentlichungsnummer: **0 117 480**
**B1**

(12) **EUROPÄISCHE PATENTSCHRIFT**

(45) Veröffentlichungstag der Patentschrift :
04.05.88

(51) Int. Cl.⁴ : **C 09 K 3/16, C 08 J 7/04**

(21) Anmeldenummer : 84101510.0

(22) Anmeldetag : 14.02.84

(54) Kunststoffolie.

(30) Priorität : 23.02.83 DE 3306190

(43) Veröffentlichungstag der Anmeldung :
05.09.84 Patentblatt 84/36

(45) Bekanntmachung des Hinweises auf die Patenterteilung : 04.05.88 Patentblatt 88/18

(84) Benannte Vertragsstaaten :
AT BE CH DE FR GB IT LI NL SE

(56) Entgegenhaltungen :
DE-B- 2 042 430
DE-B- 2 162 204
DE-C- 1 228 026
DE-C- 2 139 538
US-A- 3 382 096

(73) Patentinhaber : HOECHST AKTIENGESELLSCHAFT
Postfach 80 03 20
D-6230 Frankfurt am Main 80 (DE)

(72) Erfinder : Thoese, Klaus, Dr.
Erbsenacker 15
D-6200 Wiebaden (DE)

Jouve, 18, rue St-Denis, 75001 Paris, France

0 117 480

## Beschreibung

Die Erfindung betrifft eine Kunststoffolie, die auf mindestens einer Oberfläche eine antistatische Beschichtung trägt.

Folien aus Kunststoffen sind bekannt und haben neben ihrem hohen Gebrauchswert den Nachteil, daß sie elektrostatisch unerwünscht stark aufladbar sind. Es sind Folien bekannt, denen man zur Verhinderung dieser Eigenschaft ein Antistatikum in Masse eingearbeitet hat oder bei denen eine dünne Schicht aus einem Antistatikum auf die Oberfläche aufgetragen wird. Bei den Folien nach der ersten Art ist entweder der erreichbare antistatische Effekt gering oder aber, bei höherem Zusatz von Antistatikum, verschlechtern sich deutlich die mechanischen Eigenschaften der Folien. Das Auftragen einer antistatischen Schicht führt zu besseren Effekten. Bei den Antistatika handelt es sich meistens um in Wasser lösliche niedermolekulare oder polymere Produkte. Hierdurch sind jedoch der Beständigkeit der Schicht gegen Feuchtigkeit bzw. Wasser Grenzen gesetzt. Außerdem lassen sich diese Schichten mechanisch leicht abreiben und verlieren damit ihre Wirkung.

Kombiniert man dagegen herkömmliche Antistatika mit Bindemitteln, so erhält man zwar eine gegen mechanische Einwirkung beständigere, entsprechend geringere antistatische Wirkung, aber nach der Einwirkung von Wasser geht auch diese verloren.

Es war deshalb Aufgabe der Erfindung, antistatisch ausgerüstete Kunststoffolien zu schaffen, die eine hohe Beständigkeit gegen Feuchtigkeit und Wasserangriff besitzen und bei mechanischem Eingriff ihre Eigenschaften nicht oder doch in erheblich geringerem Maße verlieren.

Die Lösung dieser Aufgabe geht von einer Kunststoffolie der eingangs genannten Art aus und ist dadurch gekennzeichnet, daß die Beschichtung als Antistatikum ein mit Epihalogenhydrin, vorzugsweise ein mit Epichlorhydrin modifiziertes Polyamino/Polyamid-Harz enthält oder daraus besteht.

Durch die Erfindung wird erreicht, daß man nunmehr antistatisch ausgerüstete Folien aus Kunststoff zur Verfügung stellen kann, zum Beispiel zur Verwendung als Kassetten-Beilagescheiden, als Montagefolien oder als Vorlauf für Videobänder, deren antistatische Wirkung nicht durch Feuchte, Wasser oder durch mechanischen Eingriff beeinträchtigt wird.

Die erfindungsgemäß verwendeten, mit Epihalogenhydrin modifizierten Polyamino/Polyamid-Harze sind bekannt. Sie werden als Leimungsmittel für Papier eingesetzt und erhöhen dessen Naßfestigkeit, wie dies aus DE-AS 19 06 450 (entsprechend GB-PS 1,269,381), DE-AS 11 77 824 (entsprechend GB-PS 865 727), DE-OS 29 49 870 (entsprechend GB-PS 31 000 899) und DE-AS 17 71 243 (entsprechend GB-PS 1,388,954) hervorgeht. Es handelt sich in der Regel um Produkte, die kein freies Epihalogenhydrin mehr enthalten. Die Verwendung der Harze ist auch bekannt als Verankerungsmittel mit verminderter Durchlässigkeit von Wasserdampf und Sauerstoff für beschichtete Wursthüllen (DE-AS 21 62 204, entsprechend GB-PS 1,417,419). Ebenso sind sie als Haftvermittler-Bestandteile für photographische Filme bekannt geworden (DE-AS 21 39 538, entsprechend GB-PS, 1,339,317). Diese mit Epihalogenhydrin modifizierten, Aminogruppen enthaltenden Polyamid-Harze sind danach geeignet zur Verfestigung und Verbindung unter Ausnutzung ihrer Vernetzungsfähigkeit.

Es war völlig überraschend, daß diese Verbindungen erfindungsgemäß als gut wirkende Antistatika eingesetzt werden konnten.

Die im Handel erhältlichen, mit Epihalogenhydrinen modifizierten Polyamino/Polyamid-Harze gewinnt man durch Kondensation von zum Beispiel Epichlorhydrin, mit einem Amingruppen enthaltendem Polyamid.

Als Polyamine kommen einfache Alkylendiamine in Betracht oder Polyalkylenpolyamine, wie Diethylentriamin, Triethylentetramin, Tetraethylenpentamin und die entsprechenden Polypropylenpolyamine. Die Polyamino/Polyamide sind Kondensationsprodukte einer aliphatischen, gesättigten, zweibasischen Carbonsäure mit mindestens drei Kohlenstoffatomen und einem der obengenannten Polyamine. Vorzugsweise werden Kondensationsprodukte aus einer zweibasischen Carbonsäure mit drei bis zehn Kohlenstoffatomen als zweibasische Säure und einem Polyalkylenpolyamin verwendet. Die Kondensationsprodukte können die basische Komponente in stöchiometrischem Überschuß enthalten. Es können auch Gemische der Säuren und der Polyamine eingesetzt werden, soweit das hergestellte Polyamino/Polyamid-Harz in Wasser echt löslich oder zumindest kolloidal löslich ist.

Als Polyamino/Polyamid-Harze sind auch insbesondere solche geeignet, die unter Verwendung polymerer Carbonsäuren mit mindestens 18 Kohlenstoffatomen hergestellt worden sind und die die basische Komponente in stöchiometrischem Überschuß zu den vorhandenen Carboxylgruppen enthalten. Sie werden durch Erhitzen der Carbonsäuren mit Polyalkylenpolyaminen hergestellt und sind Carbonsäureamidamine. Die polymeren Carbonsäuren erhält man zum Beispiel aus der Dimerisierung ungesättigter Fettsäuren, die in technischen Ölen vorkommen. Als Polyalkylenpolyamine kommen hier Ethylendiamin, Diethylentriamin, Propylendiamin, Dipropylentriamin und deren höhermolekulare Homologe, wie etwa Hexamethylendiamin sowie deren Gemische, in Betracht.

Die antistatische Beschichtung nach der Erfindung kann aus den mit Epichlorhydrin modifiziertem Polyamino/Polyamid-Harzen allein bestehen, da sie zur Filmbildung fähig sind. Es hat sich jedoch eine Ausführungsform als günstig erwiesen, bei der die antistatische Beschichtung aus einem Bindemittel, das in wäßrig-alkoholischer Lösung löslich oder in Wasser dispergierbar ist, und dem Antistatikum besteht.

**0 117 480**

Die Dicke der Beschichtung beträgt, auf das Schichtgewicht bezogen, etwa 0,01 bis etwa 3,0 g/m². Die Schicht enthält dabei vorzugsweise 30 bis 70 Gewichtsprozent, bezogen auf ihr Gesamtgewicht, an mit Epihalogenhydrin, insbesondere Epichlorhydrin modifiziertem Polyamino/Polyamid-Harz.

Als Bindemittel eignen sich zum Beispiel Homo- und Copolymerisate aus Vinylacetat, Acryl- oder Methacrylsäureester, Styrol, Vinylchlorid, Vinylidenchlorid, alkohollösliche Celluloseester, andere Polymere und Formaldehydvorkondensate, die aus wäßrigen Dispersionen oder wäßrig-alkoholischen Lösungen verarbeitet werden können.

Die Auswahl des Bindemittels erfolgt in Abhängigkeit von dem jeweiligen Anwendungsgzweck. So wird man zum Beispiel für mechanisch besonders widerstandsfähige, antistatische Schichten die nur in Gemischen aus Alkohol und wenig Wasser löslichen Celluloseester, Polyvinylacetate, Polyacrylate oder Polymethacrylate verwenden. Hat man keine explosionsgeschützten Maschinen zur Verfügung, bieten sich als Bindemittel in Wasser dispergierte Polymere an.

Als Träger dienen Kunststoffolien aus Polyvinylchlorid, Polycarbonat, Polystyrol, Polysulfon, Polyolefin oder aus Polyester bzw. Celluloseester, wie Acetatfolie. Wegen der hervorragenden Dimensionsstabilität, die in vielen Fällen von besonderer Wichtigkeit ist, werden vorzugsweise Folien auf Basis Polyester, wie etwa Polyethylenterephthalat, eingesetzt.

Es können beide oder auch nur eine Oberfläche mit der erfindungsgemäßen antistatisch wirkenden Beschichtung versehen sein. Im Falle einer einseitigen Beschichtung kann die andere Seite auch eine andere funktionelle Schicht, wie etwa eine pigmentierte oder gefärbte Schicht, tragen.

Weiterhin kann auf der Kunststoffolie auf mindestens einer ihrer Oberflächen eine haftvermittelnde Zwischenschicht vorhanden sein, auf die anschließend die Schicht mit dem erfindungsgemäßen Antistatikum aufgetragen wird.

Als solche Zwischenschichten dienen bekannte Mischungen, die zum Beispiel in der DE-PS 12 28 414 (entsprechend GB-PS 1,061, 784) beschrieben sind und aus einem Gemisch der wäßrigen Lösung einer Halogencarbonsäure, feinst verteiltem Siliziumdioxid und Netzmittel bestehen oder auch aus Mischungen nach DE-AS 16 94 534 (entsprechend GB-PS 1,209,992). Weiterhin können substrierte Folien nach DE-AS 16 29 480 (entsprchend GB-PS 1,127,076) und nach DE-AS 20 34 107 (entsprechend GB-PS 1,264,338) verwendet werden.

Die folgenden Beispiele sollen die Erfindung näher erläutern.

Als Antistatika wurden die in der Tabelle aufgeführten Harze verwendet. Bei den Produkten mit Kurzbezeichnung A, B und D handelt es sich um in Wasser gelöste, mit Epichlorhydrin modifizierte Polyamino/Polyamid-Harze aus $C_3$- bis $C_{10}$-Dicarbonsäuren. Bei Produkt C handelt es sich um ein in Wasser gelöstes, mit Epichlorhydrin modifiziertes Polyamino/Polyamid-Harz aus Carbonsäuren mit Kettenlängen von mehr als 10 Kohlenstoffatomen.

Tabelle 1

| Kurzbezeichnung | A | B | C | D |
|---|---|---|---|---|
| Konzentration (%) | 20 | 10 | 14 | 12,5 |
| Viskosität bei 20 °C (m Pa s) | 35-70 | 10-14 | 5-15 | ca. 15 |
| pH-Wert | 2,5-3 | 4-4,5 | ca. 4,5 | 5 |
| Spez. Gewicht *) ($g/cm^3$) | 1,056-1,062 | 1,022-1,024 | 1,02 | 1,034 |

(*) Die spezifischen Gewichte waren bei 20 °C, im Falle von D bei 25 °C gemessen worden.

3

## Beispiel 1

Als Kunststoffolie diente eine 125 μm dicke Folie aus biaxial verstrecktem Polyethylenterephthalat mit einer Haftschicht, wie sie aus der DE-AS 20 34 407 bekannt geworden ist.

Auf diese Unterlage wurden Lösungen folgender Zusammensetzung mit einer Rakel so aufgetragen, daß nach der Trocknung von 5 Minuten bei 120 °C Trockengewichte zwischen 0,2 bis 0,3 g/m² erzielt wurden. Die Konzentration an Feststoff in den Lösungen betrug 2,5 %.

I.   25 g Harz (A)
     75 g Entionisiertes Wasser
    100 g Isopropylalkohol
      2 g Netzmittel-Lösung (*) (10 %ig)

II.  50 g Harz (B)
     50 g Entionisiertes Wasser
    100 g Isopropylalkohol
      2 g Netzmittel-Lösung (*) (10 %ig)

III. 50   g Harz (C)
     90   g Entionisiertes Wasser
    140   g Isopropylalkohol
      5,6 g Netzmittel-Lösung (*) (10 %ig)

(*) Bei dem Netzmittel handelte es sich immer um einen Tributylphenolpolyglykolether mit etwa 13 Molen Ethylenoxid in der Polyglykol-Kette.

Zur Prüfung der Filme wurde ihre Klarheit visuell beobachtet. Durch Reiben wurde die mechanische Festigkeit geprüft. Zur Charakterisierung der antistatischen Wirkung wurde nach Konditionierung 24 Stunden bei 50 % relativer Feuchte und 23 °C mit einer Federzungenelektrode (Anordnung A) nach DIN 53 482 bzw. VDE 0303 Teil 3 und 100 V Meßspannung der Oberflächenwiderstand gemessen.

Der Oberflächenwiderstand wurde von Proben im Herstellungszustand und nach Tauchen 10 Minuten in entionisiertes Wasser und Trocknen an der Luft geprüft.

Die Tabelle enthält die Ergebnisse.

### Tabelle 2

| Lösung | Optische Be-schaffenheit | Mechanische Festigkeit | Oberflächenwiderstand ($\Omega$) | |
|---|---|---|---|---|
| | | | Trocken | Nach Tauchen in Wasser |
| I. | fast klar | gering | $2,8 \times 10^{10}$ | $6,5 \times 10^{12}$ |
| II. | leicht trüb | sehr gering | $1,8 \times 10^{10}$ | $2,6 \times 10^{12}$ |
| III. | klar | sehr gering | $1,6 \times 10^{11}$ | $6,5 \times 10^{11}$ |

## Beispiel 2

Als Kunststoffolie diente eine 75 μm dicke Folie aus biaxial verstrecktem Polyethylenterephthalat mit Haftschichten nach der DE-AS 20 34 407 auf beiden Seiten. Auf diese Folie wurden 2,5 %ige Lösungen in gleichen Teilen entionisiertem Wasser und Isopropylalkohol, wie in Beispiel 1 beschrieben, aufgetragen und getrocknet. Die mit Epichlorhydrin modifizierten Polyamino/Polyamid-Harze waren dabei abgemischt mit dem Ammoniumsalz eines Copolymerisates aus Vinylacetat und 5 % Crotonsäure in Mengenverhältnissen, wie es die folgende Tabelle angibt :

(Siehe Tabelle 3 Seite 5 f.)

Tabelle 3

| Zusammensetzung (%) | | Optische Be- schaffenheit | Oberflächenwiderstand ($\Omega$) | |
|---|---|---|---|---|
| Copoly- merisat | Harz | | Trocken | Nach Tauchen in Wasser |
| 100 | 0 | klar | $> 10^{13}$ | $> 10^{13}$ |
| 0 | 100 A | klar | $1,5 \times 10^{10}$ | $4,2 \times 10^{12}$ |
| 20 | 80 " | trüb | $6,0 \times 10^{11}$ | $2,1 \times 10^{13}$ |
| 30 | 70 " | trüb | $6,5 \times 10^{11}$ | $5,6 \times 10^{12}$ |
| 50 | 50 " | fast klar | $1,1 \times 10^{12}$ | $2,4 \times 10^{13}$ |
| 0 | 100 B | stark trüb | – | – |
| 20 | 80 " | trüb | $1,9 \times 10^{10}$ | $1,8 \times 10^{12}$ |
| 30 | 70 " | trüb | $3,7 \times 10^{10}$ | $1,5 \times 10^{12}$ |
| 50 | 50 " | klar | $5,5 \times 10^{10}$ | $> 10^{13}$ |
| 0 | 100 C | klar | $1,3 \times 10^{10}$ | $5,5 \times 10^{11}$ |
| 20 | 80 " | klar | $3,4 \times 10^{10}$ | $1,5 \times 10^{12}$ |
| 30 | 70 " | klar | $2,8 \times 10^{10}$ | $6,5 \times 10^{11}$ |
| 50 | 50 " | klar | $4,6 \times 10^{10}$ | $9,1 \times 10^{12}$ |

Beispiel 3

Wie in Beispiel 2 beschrieben, wurden aus dem Harz C Schichten mit anderen Polymeren im Feststoffverhältnis 1 : 1 angefertigt. Dazu wurden Filme aus 2,5 %igen Lösungen verschiedener Polymerisate in einem Lösungsmittel-Gemisch aus 10 % entionisiertem Wasser und 90 % Isopropylalkohol hergestellt. Weiterhin wurden die Lösungen mit gleichen Gewichtsteilen folgender Lösung versetzt und verfilmt. Davon sind die Ergebnisse jeweils als zweiter Wert aufgeschrieben.

50 g Harz C
90 g Entionisiertes Wasser
140 g Isopropylalkohol.

Tabelle 4

| Art des Polymeren | Optische Be- schaffenheit | Mech. Festig- keit nach 1 h Wasser | Oberflächen- widerstand ($\Omega$) |
|---|---|---|---|
| Alkohollösliches Celluloseaceto- propionat | klar | gut | $> 10^{13}$ |
| | schwach trüb | geringer | $1,3 \times 10^{11}$ |
| Methylmethacrylat- copolymerisat | klar | gut | $6,0 \times 10^{13}$ |
| | schwach trüb | gut | $9,5 \times 10^{10}$ |
| Copolymerisat aus Vinylacetat und Crotonsäure | klar | gut | $2,5 \times 10^{13}$ |
| | fast klar | gut | $1,3 \times 10^{11}$ |
| Polyvinylacetat | klar | gut | $2,3 \times 10^{13}$ |
| | fast klar | gut | $9,0 \times 10^{10}$ |

### Beispiel 4

Als Kunststoffträger wurde die in Beispiel 1 beschriebene Folie eingesetzt. Bei den Polymerisaten handelte es sich um Produkte in wäßriger Dispersion mit folgender Zusammensetzung :

Acrylester-Mischpolymerisat-Dispersion mit 40 % Feststoff, pH-Wert von 5 bis 7 und einer mittleren Teilchengröße von 0,23 μm (1).

Polyvinylacetat-Dispersion mit ca. 53 % Feststoff, weichmacherfrei, pH-Wert von 4 bis 5 und einer Teilchengrößenverteilung von 0,1 bis 1 μm (2).

Styrol-Homopolymerisat-Dispersion mit etwa 50 % Feststoff, weichmacherfrei, und einem pH-Wert von 7,5 bis 9,5 (3).

Die Dispersionen wurden 20 %ig in Wasser aufgetragen und verfilmt. Weiterhin wurden sie in folgender Weise mit dem vorbeschriebenen Harz B gemischt und nach Beispiel 1 verarbeitet.

Zusammensetzungen :

I. 35 g Dispersion 1
  5 g Stadtwasser
  60 g Harz B

II. 26 g Dispersion 2
  14 g Stadtwasser
  60 g Harz B

III. 28 g Dispersion 3
  12 g Stadtwasser
  60 g Harz B.

In der Tabelle sind zuerst jeweils die Ergebnisse von den Filmen aus der Dispersion allein und danach die Ergebnisse von den Mischungen nach I. bis III. eingetragen.

### Tabelle 5

| Dispersion bzw. Mischung | Optische Be- schaffenheit | Oberflächenwiderstand (Ω) | |
| --- | --- | --- | --- |
| | | Trocken | Nach Tauchen in Wasser |
| 1 | klar | $> 10^{13}$ | $9,5 \times 10^{13}$ |
| I. | leicht trüb | $9 \times 10^{9}$ | $8,5 \times 10^{10}$ |
| 2 | klar | $1,2 \times 10^{12}$ | $> 10^{13}$ |
| II. | klar | $3,8 \times 10^{9}$ | $3,4 \times 10^{10}$ |
| 3 | klar | $2,6 \times 10^{11}$ | $> 10^{13}$ |
| III. | leicht trüb | $3,8 \times 10^{9}$ | $4,2 \times 10^{10}$ |

### Beispiel 5

Es wurde wie in Beispiel 4 verfahren. Folgende Mischungen kamen zur Anwendung :

I. 26 g Dispersion 2
  14 g Stadtwasser
  60 g Harz B

II. 26 g Dispersion 2
  44 g Stadtwasser
  30 g Harz A

III. 26 g Dispersion 2
  26 g Stadtwasser
  48 g Harz D

IV. 26 g Dispersion 2
  31 g Stadtwasser
  43 g Harz C

6

Tabelle 6

| Mischung Nr. | Optische Beschaffenheit | Oberflächenwiderstand ($\Omega$) | |
|---|---|---|---|
| | | Trocken | Nach Tauchen in Wasser |
| I. | klar | $3,8 \times 10^9$ | $3,4 \times 10^{10}$ |
| II. | klar | $9,0 \times 10^{10}$ | $1,5 \times 10^{12}$ |
| III. | klar | $2,1 \times 10^{11}$ | $2,4 \times 10^{12}$ |
| IV. | klar | $1,2 \times 10^{10}$ | $4,6 \times 10^{11}$ |

Beispiel 6

Es wurden die in Beispiel 3 beschriebenen Lösungen mit dem Copolymerisat aus Vinylacetat und Crotonsäure bzw. dem Polyvinylacetat als Bindemittel hergestellt und auch Beispiel 3 entsprechend mit Harz C kombiniert, aber 5 Minuten bei 100 °C getrocknet.

Als Kunststoffträger diente eine 75 μm starke Folie aus biaxial verstrecktem Polyethylenterephthalat ohne Haftvorbehandlung. Die Tabelle enthält dazu die Prüfergebnisse, wobei der zweite Wert jeweils für die Harz C enthaltende Schicht steht.

Tabelle 7

| Art des Polymerisates | Optische Beschaffenheit | Wasserfestigkeit | Oberflächenwiderstand ($\Omega$) | |
|---|---|---|---|---|
| | | | Trocken | Nach Tauchen in Wasser |
| Copolymerisat aus Vinylacetat und Crotonsäure | klar | gut | $> 10^{13}$ | $> 10^{13}$ |
| | klar | fast gut | $2,8 \times 10^{11}$ | $> 10^{13}$ |
| Polyvinylacetat | klar | gut | $> 10^{13}$ | $> 10^{13}$ |
| | klar | fast gut | $2,2 \times 10^{11}$ | $> 10^{13}$ |

Beispiel 7

Verfahren wurde, wie in Beispiel 6 beschrieben, als Kunststoffträger wurde aber eine 140 μm starke glasklare Folie aus Cellulosetriacetat verwendet. In der Tabelle sind die Versuche eingetragen, auch hier steht der zweite Wert für die Harz C enthaltende Schicht.

7

Tabelle 8

| Art des Poly-merisates | Optische Be-schaffenheit | Wasser festigkeit | Oberflächen-widerstand (Ω) | |
|---|---|---|---|---|
| | | | Trocken | Nach Tau-chen in Wasser |
| Copolymerisat | | | | |
| aus Vinylacetat | klar | gut | $>10^{13}$ | $>10^{13}$ |
| und Crotonsäure | klar | fast gut | $6,5 \times 10^{10}$ | $1,7 \times 10^{13}$ |
| Polyvinylacetat | klar | gut | $3,8 \times 10^{12}$ | $2,2 \times 10^{13}$ |
| | klar | fast gut | $3,5 \times 10^{11}$ | $6,1 \times 10^{12}$ |

Beispiel 8

Die verdünnte Lösung der Polymerdispersion 2 aus Beispiel 4 wurde auf eine 140 μm discke Folie aus Cellulosetriacetat aufgetragen, zusätzlich die durch Zusatz von Harz B abgeleitete Mischung II aus Beispiel 4. Getrocknet wurden die Lacke aber 5 Minuten bei 100 °C. Die Prüfergebnisse sind in folgender Tabelle zusammengetragen.

Tabelle 9

| Dispersion bzw. Mischung | Optische Be-schaffenheit | Wasser-festigkeit | Oberflächenwiderstand (Ω) | |
|---|---|---|---|---|
| | | | Trocken | Nach Tauchen in Wasser |
| 2 | klar | fast gut | $5,0 \times 10^{11}$ | $5,2 \times 10^{12}$ |
| II | klar | mäßig | $3,6 \times 10^{9}$ | $4,8 \times 10^{11}$ |

**Patentansprüche**

1. Kunststoffolie, die auf mindestens einer Oberfläche eine antistatische Beschichtung trägt, dadurch gekennzeichnet, daß die Beschichtung als Antistatikum ein mit Epihalogenhydrin modifiziertes Polyamino/Polyamid-Harz enthält oder daraus besteht.

2. Folie nach Anspruch 1, dadurch gekennzeichnet, daß die Beschichtung ein mit Epichlorhydrin modifiziertes Polyamino/Polyamid-Harz enthält oder daraus besteht.

3. Folie nach Ansprüchen 1 und 2, dadurch gekennzeichnet, daß ein mit Epichlorhydrin modifiziertes Polyamino/Polyamid-Harz vorhanden ist, das aus einem Kondensationsprodukt aus einer aliphatischen, gesättigten, zweibasischen Carbonsäure mit mindestens drei Kohlenstoffatomen und einem Polyamin besteht.

4. Folie nach Anspruch 3, dadurch gekennzeichnet, daß das Kondensationsprodukt aus einer zweibasischen Carbonsäure mit drei bis zehn Kohlenstoffatomen und einem Polyalkylenpolyamin besteht.

5. Folie nach Anspruch 3, dadurch gekennzeichnet, daß das Kondensationsprodukt aus einer

polymeren Carbonsäure mit mindestens 18 Kohlenstoffatomen besteht, die die basische Komponente des Polyalkylenpolyamins in stöchiometrischem Überschuß zu den vorhandenen Carboxylgruppen enthält.

6. Folie nach Ansprüchen 1 bis 5, dadurch gekennzeichnet, daß die Beschichtung aus einem in wäßrig-alkoholischer Lösung löslichem oder in Wasser dispergierbarem Bindemittel und dem Antistatikum besteht.

7. Folie nach Ansprüchen 1 bis 6, dadurch gekennzeichnet, daß auf mindestens einer ihrer Oberflächen eine haftvermittelnde Zwischenschicht vorhanden ist.

**Claims**

1. Plastic film which on at least one surface is provided with an antistatic coating, wherein said coating consists of or contains a polyamino/polyamide resin modified with epihalogenohydrin, as the antistatic agent.

2. Film as claimed in Claim 1, wherein the coating contains or consists of a polyamino/polyamide resin modified with epichlorohydrin.

3. Film as claimed in Claims 1 and 2, wherein an epichlorohydrin-modified polyamino/polyamide resin is contained, which consists of a condensation product of an aliphatic, saturated, dibasic carboxylic acid with at least 3 carbon atoms and a polyamine.

4. Film as claimed in Claim 3, wherein the condensation product is comprised of a dibasic carboxylic acid with 3 to 10 carbon atoms and a polyalkylene polyamine.

5. Film as claimed in Claim 3, wherein the condensation product is comprised of a polymeric carboxylic acid with at least 18 carbon atoms, in which the basic component of the polyalkylene polyamine is contained in a stoichiometric excess over the carboxyl groups which are present.

6. Film as claimed in Claims 1 to 5, wherein the coating is comprised of a binder which is soluble in an aqueous-alcoholic solution or dispersible in water, and the antistatic agent.

7. Film as claimed in Claims 1 to 6, wherein an adhesion-promoting intermediatelayer ist present on at least one surface of said film.

**Revendications**

1. Feuille de matière plastique qui porte sur au moins une surface un enduit antistatique, caractérisée en ce que l'enduit contient comme antistatique une résine polyamino/polyamide modifiée par une épihalogenhydrine ou bien est constitué de cette résine.

2. Feuille selon la revendication 1 caractérisée en ce que l'enduit contient une résine polyamino/polyamide modifiée par une épichlorhydrine ou bien est constitué de cette résine.

3. Feuille suivant les revendications 1 et 2 caractérisée par la présence d'une résine polyamino/polyamide modifiée par une épichlorohydrine, qui est constituée du produit de condensation d'un diacide carboxylique aliphatique saturé ayant au moins trois atomes de carbone et d'une polyamine.

4. Feuille selon la revendication 3 caractérisée en ce que le produit de condensation est constitué d'un diacide carboxylique ayant trois à dix atomes de carbone et d'une polyalkylènepolyamine.

5. Feuille selon la revendication 3 caractérisée en ce que le produit de condensation est constitué d'un acide carboxylique polymère ayant au moins 18 atomes de carbone, qui contient le constituant basique de la polyalkylènepolyamine en excès stoechiométrique par rapport aux groupes carboxyle présents.

6. Feuille selon les revendications 1 à 5 caractérisée en ce que l'enduit est constitué d'un liant soluble dans une solution aqueuse alcoolique ou dispersable dans l'eau et de l'antistatique.

7. Feuille selon les revendications 1 à 6 caractérisée en ce que sur au moins une de ses surfaces se trouve une couche intermédiaire favorisant l'adhérence.